# EUROPEAN PATENT APPLICATION

(11) **EP 2 168 937 A2**
(43) Date of publication of application: **31.03.2010**
(21) Application number: 09170394.2
(22) Date of filing: 16.09.2009
(51) Int. Cl.: C04B 41/81, H01B 3/12, H01B 17/50

(54) **Anti-contamination insulator**

(30) Priority: 29.09.2008 JP 2008250584; 08.09.2009 JP 2009206919
(71) Applicant: NGK Insulators, Ltd., Nagoya-shi, Aichi 467-8530 (JP)
(72) Inventor: Ito, Susumu, Nagoya-shi Aichi 467-8530 (JP); Suzuki, Yoshihiro, Nagoya-shi Aichi 467-8530 (JP); Sugiura, Yoshiaki, Nagoya-shi Aichi 467-8530 (JP); Sato, Ritsu, Nagoya-shi Aichi 467-8530 (JP)
(74) Representative: TBK-Patent

(57) **Abstract**

An anti-contamination insulator in which a coating layer containing an antistatic agent is formed on surfaces of a porcelain insulator main body, onto which ordinary glaze is coated, and which can prevent contaminants contained in the air from adhering by charging is provided. The antistatic agent is an agent having conductive metal oxide, such as ZnO, Sb₂O₄, or SnO₂, or metal dispersed in binder. A thickness of the coating layer is adjusted so that a surface resistance of the insulator is 1,000 MΩ to 100,000 MΩ. According to the present invention, it is possible to prevent reduction in withstand voltage characteristics even in areas suffering from severe air pollution. The anti-contamination insulator is particularly suited as an insulator for direct-current transmission and does not cause shortening of an insulator service life.

## Description

### Field of the Invention

The present invention relates to an anti-contamination insulator suited to be used in a contaminated environment in which the air contains smoke and dust emitted from plants, motor vehicles and the like.

### Background of the Invention

Porcelain insulators excellent in electrical insulating properties, mechanical strength and durability have been long used as insulators for insulating and supporting power lines, distribution lines, station and substation equipment and the like. A porcelain insulator has a high surface resistance of 100,000 to 200,000 MΩ in a clean state. However, it is known that the surface resistance falls and withstand voltage characteristics greatly deteriorate if a surface of the insulator is contaminated. In particular, Japan, which is surrounded by sea, is confronted with the problem of rapid contamination caused by adhesion of salt that comes flying from the sea due to strong wind. Various measures against the problem have long been studied in Japan. Furthermore, overseas countries such as China and India have the problem that contaminants are deposited on insulators due to ongoing urban development or special climate and geographic conditions, and measures against the problem are much needed in these countries.

Among insulators, in the case of a large-sized bushing or the like installed in a power station, a substation or the like, increasing a surface creepage distance to improve anti-contamination performance is restricted in terms of mechanical strength and cost. Due to this, it is expected to develop a technique capable of improving the anti-contamination performance without increasing the surface creepage distance. According to current techniques, it is effective to use an insulator washing equipment for washing away salt adhering onto the surface of an insulator by draining water without increasing the surface creepage distance. However, with views of energy saving and cost reduction, it is desired to decrease the number of washing times and to reduce water consumption. Further, insulators used for a power line or a distribution line are distributed in a wide range. Due to this, it is practically difficult to individually install insulator washing equipment to correspond to the respective insulators, and it is necessary to make insulators excellent in anti-contamination performance (to provide an anti-contamination insulator).

Types of conventional insulators are roughly classified into a type in which an insulator itself has an elaborate shape, a type in which an insulator has a water-repellent surface so that salt does not adversely influence the insulator even if the salt adheres to the surface of the insulator, a type in which semiconducting glaze is coated onto an insulator and the like. As an example of the elaborate shape of the insulator itself, various rib sheds are formed on an insulator main body, thereby increasing the surface creepage distance of the insulator and preventing flashover even if the salt adheres onto the surface of the insulator, as described as a anti-contamination type suspension insulator in *"*Insulator", page 2, the Institute of Electrical Engineers of Japan (IEEJ), June 1983. Although most of the salt adhering onto the surface of the insulator due to strong wind such as typhoon is washed away later by rainwater, contamination due to air pollution is difficult to eliminate and is increasingly deposited on the insulator. Due to this, there is a limit to the effect of forming rib sheds on the insulator main body.

As an example of the insulator having the water-repellent surface, there is known an insulator onto which surface a water-repellent material such as a silicone compound, fluororesin or silicon rubber is applied as described in *"*Insulator", page 225, IEEJ, June 1983. This technique has, however, the following problems. If water-repellency of the surface is temporarily lost due to rain or the like, or if an air pollutant such as smoke adheres onto the surface of the insulator, then the water-repellency greatly deteriorates and an expected effect cannot be kept for a long period of time. For these reasons, this technique is not very effective against adhesion of air pollutants. Moreover, attempts are recently made in various purposes to wash contamination using a photocatalytic action of organic material decomposition or hydrophilicity. However, it is necessary to regularly prepare a certain amount of water so as to demonstrate the contamination washing effect. Due to this, this technique is not appropriate as anti-contamination measures for insulators installed in a contaminated environment, except for rainy regions.

An insulator whose surfaces are coated by semiconducting glaze has a surface resistance of 10 to 900 MΩ and has an improved anti-contamination performance using the uniform resistance effect produced by the semiconducting glaze and the heat generation effect produced by small current flowing through the semiconducting glaze. However, since the small current constantly and continuously flows through the semiconducting glaze, insulators of this type tend to have a shorter service life, compared to an ordinary porcelain insulator.

As stated above, the conventional anti-contamination insulators are mainly intended to prevent reduction in the withstand voltage characteristics influenced by sea salt contamination. Due to this, the conventional anti-contamination insulators are disadvantageously incapable of exhibiting sufficient effects in industrial areas suffering from severe air pollution which mainly contains smoke and dust. Furthermore, the service life of the semiconducting glaze insulator is disadvantageously shorter than that of the ordinary porcelain insulator. It is, therefore, an object of the present invention to provide an anti-contamination insulator which is capable of solving the conventional problems, preventing reduction in withstand voltage characteristics even in areas suffering from severe air pollution, and preventing shortening of an insulator service life.

### SUMMARY OF THE INVENTION

In order to solve the above-described problems, the inventor of the present invention conducted utmost study about substances adhering onto surfaces of insulators installed in the polluted air environment and, as a result, discovered that contamination other than the salt adheres onto surfaces of the insulators by being electrostatically charged on the surfaces. Since high operation voltage is constantly applied to the insulators, the electrostatic effect has not been studied before. Besides, while alternating-current (AC) transmission is mainly performed in Japan, it is known that direct-current (DC) transmission is more effective for long-distance power transmission. In the case of DC transmission, the electrostatic effect is considered to be greater since voltage polarity is always constant.

The anti-contamination insulator according to a first aspect of the present invention based on the above-stated knowledge is an insulator, wherein a coating layer containing an antistatic agent is formed on surfaces of the porcelain insulator main body. As described in claim 2, it is preferable that the antistatic agent is an agent having conductive metal oxide or metal dispersed in binder. As described in claim 3, it is preferable that the conductive metal oxide or the metal is a substance such as ZnO, Sb₂O₄, SnO₂, Fe₂O₃ and Ag. As described in claim 4, it is preferable that a thickness of the coating layer is adjusted so that a surface resistance of the insulator after coating falls within a range from 1,000 MΩ to 100,000 MΩ. As described in claim 5, it is further preferable that the insulator main body includes a lower-rib shed or an outer-rib shed. As described in claim 6, the coating layer containing the antistatic agent can be formed on the entire surfaces, only on an upper surface, only on a lower surface or only on a part of the entire surfaces of the insulator main body.

In the anti-contamination insulator according to the present invention, the coating layer containing an antistatic agent is formed on the surfaces of the porcelain insulator main body. It is thereby possible to prevent contaminants present in the polluted air from adhering onto the surface of the insulator by electrostatic force. Therefore, the insulator according to the present invention is suited to be installed in heavily polluted areas such as inland industrial areas away from the seacoast and particularly suited to be used as an insulator for DC transmission.

According to the invention described in claim 2, the antistatic agent having conductive metal oxide or metal dispersed in binder is used. Since the conductive metal oxide is stable in properties and the conductive properties are not deteriorated, it is possible to attain a stable static charge prevention effect for a long period of time.

According to the invention described in claim 3, the substance such as ZnO, Sb₂O₄, SnO₂, Fe₂O₃, Ag is used as the conductive metal oxide or the metal. Since these substances are relatively inexpensive and have stable conductive properties, it is possible to manufacture anti-contamination insulators with constant quality at low cost.

According to the invention described in claim 4, the thickness of the coating layer is adjusted so that the surface resistance of the insulator falls within a range from 1,000 MΩ to 100,000 MΩ. If the surface resistance is below this range, small current causes shortening of a service life similarly to the conventional semiconducting glaze insulator. If the surface resistance exceeds this range, the static charge prevention effect is hampered. It is, therefore, possible to obtain the anti-contamination insulator that can prevent reduction in withstand voltage characteristics and shortening of the service life if the surface resistance falls within this range.

If the insulator main body includes a lower-rib shed or an outer-rib shed according to the invention described in claim 5, the anti-contamination insulator can exhibit an effect produced by increasing a surface creepage distance. The anti-contamination insulator can, therefore, assume more excellent anti-contamination performance. Particularly, if the anti-contamination insulator is of a lower-rib type, the coating layer containing the antistatic agent may be formed on the entire surfaces, only on an upper surface, only on a lower surface or only on a part of the surfaces of the insulator main body as described in claim 6.

### BRIEF DESCRIPTION OF THE DRAWINGS

FIG. 1 is a partial cross-sectional view showing an anti-contamination insulator according to a first embodiment of the present invention;
FIG. 2 is a typical enlarged cross-sectional view showing a surface of the anti-contamination insulator; and
FIG. 3 is a partial cross-sectional view showing an anti-contamination insulator according to a second embodiment of the present invention.

### DETAILED DESCRIPTION OF THE INVENTION

Preferred embodiments of the present invention will be described hereinafter.

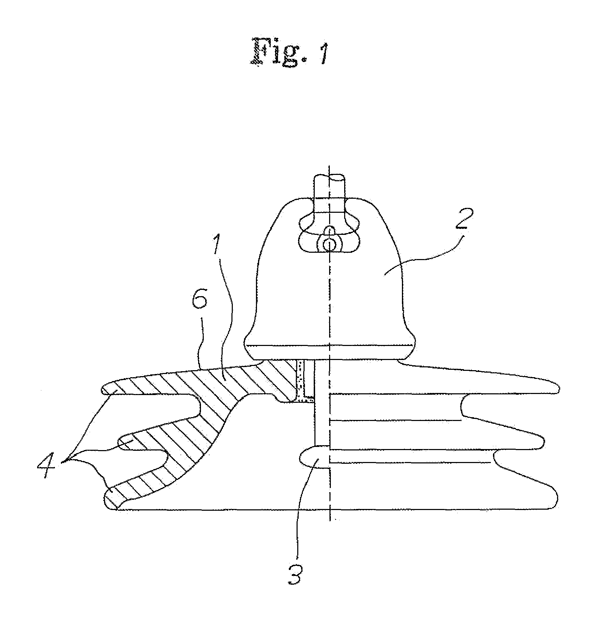

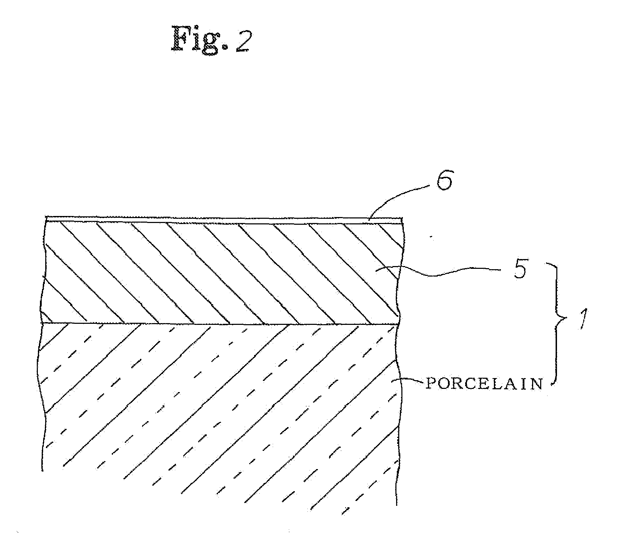

FIG. 1 is a partial cross-sectional view showing an anti-contamination insulator according to a first embodiment of the present invention. The insulator shown in FIG. 1 is referred to as "lower-rib type suspension insulator". Reference symbol 1 denotes a porcelain insulator main body, reference symbol 2 denotes a cap and reference symbol 3 denotes a pin. Three outer-rib sheds 4 are formed on an outer circumference of the insulator main body 1, thereby increasing a surface creepage distance from the cap 2 to the pin 3. The inner surface of the insulator main body 1 is smooth. As typically shown in FIG. 2, an ordinary glaze layer 5 is formed onto a surface of the insulator main body 1 and an antistatic agent coating layer 6 is formed on the glaze layer 5. While a thickness of the glaze layer 5 is several hundreds of micrometers (µm), a thickness of the coating layer 6 is quite small to be equal to or smaller than one-hundredth of that of the glaze layer 5. Basically, the coating layer 6 is formed on entire surfaces of the insulator main body 1. Alternatively, as shown in Example 2 to be described later, the coating layer 6 can be formed only on an upper surface, only on a lower surface or only a part of the entire surfaces of the insulator main body 1, depending on a shape of the insulator.

This coating layer 6 mainly contains the antistatic agent having conductive metal oxide or metal dispersed in binder. As the conductive metal oxide or metal, it is preferable to use a substance selected from ZnO, Sb₂O₄, SnO₂, Fe₂O₃, Ag and the like. Among various types of conductive substances, the metal oxides are stable in properties and hence suitable for the insulator installed outdoors and exposed to wind, rain and sunshine. Furthermore, types of conductive metal oxides are limited, and examples of those used as industrial materials that are available at a relatively low cost include ZnO, Sb₂O₄, SnO₂ and Fe₂O₃. Alternatively, a small quantity of silver ions can be added to these metal oxides so that the metal oxides can assume antibacterial properties.

The binder serves to bind metal oxide particles together and to fix the metal oxide particles to the surfaces of the insulator main body 1. The binder may be either organic binder such as silicone resin or polymerized fatty acid-based polyester amide block copolymer or inorganic binder such as siloxane. The silicone resin has an effect of improving water-repellency. The siloxane strongly binds to Si atoms on the surfaces of the insulator and has an effect of improving stability of the binder. However, the type of binder is not particularly limited as long as the binder serves to fix metal oxide particles to the surfaces of the insulator main body 1 and has durability.

To form the coating layer 6 on the surfaces of the insulator main body 1, the antistatic agent having the metal oxide dispersed in the binder may be further dissolved in a solvent, and a resultant solution may be coated onto the surfaces of the insulator main body 1 by appropriate means such as dipping, spraying, pouring or coating using a waste cloth and dried, thereby splashing away the solvent. The type of solvent can be appropriately decided according to the binder. If the binder is the organic binder such as silicone resin or polymerized fatty acid-based polyester amide block copolymer, a mixture solution of isopropanol and 1-butanol can be used. If the binder is siloxane, then methanol, pure water or the like can be used.

A thickness of the coating layer 6 is adjusted so that a surface resistance of the insulator falls within a range from 1,000 MΩ to 100,000 MΩ. The surface resistance changes depending on not only the thickness of the coating layer 6 but also a content and type of the metal oxide. In actuality, the thickness may be controlled using, as an index, the surface resistance of the insulator on which the coating layer 6 is formed. If the surface resistance is lower than 1,000 MΩ, then the insulator nears the conventional semiconducting glaze insulator and small current continuously flows through the coating layer 6. Due to this, as compared with an ordinary porcelain insulator, the service life of the insulator may possibly be short. Conversely, if the surface resistance exceeds 100,000 MΩ, the effect of releasing the static electricity is insufficient. Preferably, therefore, the thickness of the coating layer 6 falls within the range from 1,000 MΩ to 100,000 MΩ. If the material as stated above are used, the thickness of the coating layer 6 is almost in a range from 0.1 µm to 5 µm.

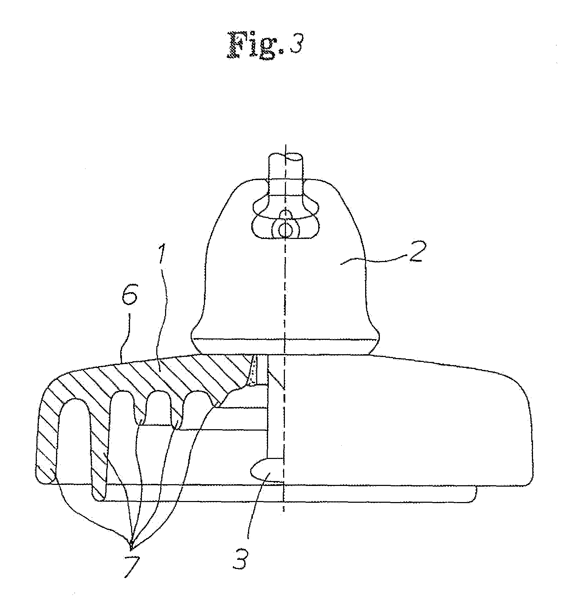

In the first embodiment, the insulator main body 1 is outer-rib type suspension insulator. In a second embodiment shown in FIG. 3, an insulator is a "lower-rib type suspension insulator" having a plurality of lower ribs 7 extended from a lower surface of an insulator main body 1. In the second embodiment as well, an ordinary glaze layer 5 is formed onto the entire surfaces of the insulator main body 1 and a coating layer 6 containing an antistatic agent is formed on the glaze layer 5. The coating layer 6 according to the second embodiment is similar to that according to the first embodiment, except for a shape of the insulator. While the suspension insulators are shown in these embodiments, the shape of the insulator is not limited to them and the present invention is applicable to insulators of various shapes such as a long rod insulator, a hollow porcelain, and a bushing.

In this way, if the coating layer 6 mainly containing the antistatic agent is formed on the surfaces of the porcelain insulator main body 1, contaminants such as smoke present in the air is prevented from being charged on and adhering onto the surfaces of the insulator. A contamination withstand voltage of the insulator is, therefore, improved. Specifically, if an adhesion amount of the contamination of the insulator is reduced to a half to one-third, a contamination withstand voltage of an insulator for AC transmission is 1.23 to 1.39 times as high as that of an ordinary insulator without the coating layer 6, and a contaminants withstand voltage of an insulator for DC transmission is 1.35 to 1.61 times as high as that of the ordinary insulator. In this way, since the adhesion of contamination due to charging for the DC transmission, in which voltage polarity does not change, tends to occur more often as compared with that for the AC transmission, the effects of the present invention are greater in the case of the DC transmission. However, the contamination adhesion prevention effect of the anti-contamination insulator according to the present invention is small on adhesion of non-charged particles such as water drops, and the effects of the anti-contamination insulator according to the present invention are substantially equivalent to those of the conventional insulator. Furthermore, in the anti-contamination insulator according to the present invention, the current flowing through the surface of the insulator is far lower than that flowing through the surface of the conventional semiconducting glaze insulator. Due to this, it is possible to prevent shortening of a service life of the anti-contamination insulator.

### Example 1

Using the porcelain suspension insulator including three outer-rib sheds shown in FIG. 1, four types of samples were produced. The first sample is an insulator (a standard insulator) on which a surface treatment is not carried out. A second sample is an insulator in which a surface low-energy agent (water repellent) commercially available in the brand name of X-24-7890 from Shin-Etsu Chemical Co., Ltd. is coated onto the entire surfaces of an insulator. A third sample is an insulator in which a surface low-energy agent (water repellent) commercially available in the brand name of HIREC from NTT Advanced Technology Corporation (NTT-AT) is coated onto the entire surfaces of an insulator. A fourth sample is an insulator in which the coating layer mainly containing the antistatic agent according to the present invention is coated onto the entire surfaces of an insulator. The coating layer mainly containing the antistatic agent was formed by using the antistatic agent having particles of ZnO or Sb₂O₄ dispersed in silicone resin serving as binder and by spray-coating a solution in which this binder is diluted with a mixture solution of isopropanol and 1-butanol serving as a solvent onto the surface of the insulator. It is to be noted that the surface resistance of the fourth sample was adjusted to 5,000 MΩ.

The four types of insulators, that is, first to fourth samples were subjected to a dust cycle test including contamination adhesion, wetting and drying as one cycle and artificial contaminants was sprayed, attached and deposited onto each of the insulators. The artificial contaminants consist of silica, gypsum, kaoline and common salt with a mass ratio of 2:2:2:1. It is to be noted that the insulators were subjected to the test in a de-energized state. After conducting three cycles of the test, adhesion amounts of the contamination on lower surfaces of the respective insulators were measured. This measurement was made according to a method specified in IEC Pub. 60507. As a result, if the adhesion amount of the contamination of the first sample was assumed as 100, those of the second and third samples were 103 and 65, respectively, but that of the fourth sample that is the insulator according to the present invention was as small as 17. It was thereby confirmed that the present invention exhibits a notable effect.

### Example 2

Next, using the lower-rib type suspension insulator shown in FIG. 3, a first sample (a standard insulator) on which a surface treatment is not carried out, a fourth sample in which the coating layer mainly containing the antistatic agent according to the present invention is formed on the entire surfaces of an insulator main body, and a fifth sample in which the coating layer mainly containing the antistatic agent is formed only on a lower surface of an insulator main body were produced. Adhesion amounts of contamination of these samples were measured according to the same method as that adopted in Example 1. As a result, if the adhesion amount of the contamination of the first sample was assumed as 100, those of the fourth and fifth samples were 27 and 25, respectively. It was thereby confirmed that the present invention exhibits an advantageous effect even for different shapes of insulators and that it is effective to form the coating layer mainly containing the antistatic agent only on the lower surface of the insulator main body, depending on the shape of the insulator.

Needless to say, the above-described technique of preventing contamination on insulator surfaces by utilizing the antistatic agent is also applicable to glass insulators.

An anti-contamination insulator in which a coating layer containing an antistatic agent is formed on surfaces of a porcelain insulator main body, onto which ordinary glaze is coated, and which can prevent contaminants contained in the air from adhering by charging is provided. The antistatic agent is an agent having conductive metal oxide, such as ZnO, Sb₂O₄, or SnO₂, or metal dispersed in binder. A thickness of the coating layer is adjusted so that a surface resistance of the insulator is 1,000 MΩ to 100,000 MΩ. According to the present invention, it is possible to prevent reduction in withstand voltage characteristics even in areas suffering from severe air pollution. The anti-contamination insulator is particularly suited as an insulator for direct-current transmission and does not cause shortening of an insulator service life.

## Claims

1. An anti-contamination insulator comprising:
a porcelain insulator main body,
wherein a coating layer containing an antistatic agent is formed on surfaces of the insulator main body.

2. The anti-contamination insulator according to claim 1,
wherein the antistatic agent is an agent having conductive metal oxide or metal dispersed in binder.

3. The anti-contamination insulator according to claim 2,
wherein the conductive metal oxide or the metal is a substance such as ZnO, Sb₂O₄, SnO₂, Fe₂O₃ and Ag.

4. The anti-contamination insulator according to claim 1,
wherein a thickness of the coating layer is adjusted so that a surface resistance of the anti-contamination insulator after coating falls within a range from 1,000 MΩ to 100,000 MΩ.

5. The anti-contamination insulator according to claim 1,
wherein the insulator main body includes a lower-rib shed or an outer-rib shed.

6. The anti-contamination insulator according to claim 1,
wherein the coating layer containing the antistatic agent is formed on the entire surfaces, only on an upper surface, only on a lower surface or only on a part of the surfaces of the insulator main body.
